# EUROPÄISCHE PATENTSCHRIFT

(11) **EP 0 828 644 B1**
(45) Veröffentlichungstag und Bekanntmachung des Hinweises auf die Patenterteilung: **11.11.1998**
(21) Anmeldenummer: 96914083.9
(22) Anmeldetag: 15.05.1996
(51) Int. Cl.: B61C 17/00, B60L 5/22

(54) **ELEKTRISCH ANGETRIEBENES FAHRZEUG**
ELECTRICALLY PROPELLED VEHICLE
VEHICULE A PROPULSION ELECTRIQUE

(30) Priorität: 24.05.1995 DE 29508707 U
(43) Veröffentlichungstag der Anmeldung: 18.03.1998
(73) Patentinhaber: SIEMENS AKTIENGESELLSCHAFT, 80333 München (DE)
(72) Erfinder: GEBHARD, Bruno, D-91301 Forchheim (DE); HOFMAYER, Peter, D-91083 Baiersdorf (DE); KORTEMEYER, Alfred, D-40237 Düsseldorf (DE)
(86) Internationale Anmeldenummer: DE9600862
(87) Internationale Veröffentlichungsnummer: WO9637395

(56) Entgegenhaltungen:
- DE-A- 3 536 843
- DE-U- 9 215 814

## Beschreibung

Die Erfindung betrifft ein elektrisch angetriebenes Fahrzeug mit wenigstens einem Dachcontainer und wenigstens einem Stromabnehmer, wobei der Dachcontainer zumindest Komponenten zur elektrischen Absicherung der dem Stromabnehmer nachgeschalteten Leistungselektronik enthält.

Bei derartigen Fahrzeugen, zu denen auch elektrisch angetriebene Schienenfahrzeuge zählen, sind der Dachcontainer und der Stromabnehmer räumlich getrennt angeordnet. Der Dachcontainer enthält hierbei im allgemeinen Komponenten zur elektrischen Absicherung der Traktionsausrüstung sowie der Heizung und des Bordnetzumformers. Auch die Komponenten für die Verteilung der Einspeisespannung können in einem derartigen Dachcontainer angeordnet sein.

Im bekannten Fall verlaufen die elektrischen Leitungen zwischen dem Stromabnehmer und dem Dachcontainer auf dem Dach. Die elektrischen Kabel müssen, da sie in diesem Bereich elektrisch nicht abgesichert sind, durch Rohre oder durch Kabelkanäle mechanisch geschützt werden. Solche Maßnahmen sind relativ aufwendig. Ist bei einen derart mechanisch geschützten elektrischen Kabel die Isolation beschädigt, führt dies sofort zu einen Kurzschluß.

Weiterhin ist in der EP-A-0 599 031 ein Dachcontainer beschrieben, bei dem das Gehäuse von einem rechteckigen Boden, zwei Seitenwänden und zwei Stirnwänden gebildet wird. Das Gehäuse ist durch einen einteiligen, das Gehäuse ganzflächig übedeckenden Deckel abdeckbar. Um eine gute Zugänglichkeit der im Gehäuse angeordneten Komponenten von beiden Seiten her sicherzustellen, sind an den Oberkanten der beiden Seitenwände lösbare Gelenkverbindungen angeordnet. Dadurch ist der Gehäusedeckel wechselseitig aufklappbar.

Aufgabe der vorliegenden Erfindung ist es deshalb, ein elektrisch angetriebenes Fahrzeug zu schaffen, daß nur kurze ungesicherte elektrische Leitungswege aufweist.

Die Aufgabe wird bei einem elektrisch angetriebenen Fahrzeug nach dem Oberbegriff von Anspruch 1 erfindungsgemäß durch die Merkmale im kennzeichnenden Teil dieses Anspruchs gelöst. Vorteilhafte Ausgestaltungen des Fahrzeugs nach Anspruch 1 sind jeweils Gegenstand von weiteren Ansprüchen.

Das elektrisch angetriebene Fahrzeug nach Anspruch 1 umfaßt wenigstens einen Dachcontainer sowie wenigstens einen Stromabnehmer, wobei der Dachcontainer zumindest Komponenten zur elektrischen Absicherung der dem Stromabnehmer nachgeschalteten Leistungselektronik enthält. Erfindungsgemäß ist der Stromabnehmer elektrisch isoliert auf dem Dachcontainer befestigt.

Bei dem erfindungsgemäßen Fahrzeug sind die ungesicherten elektrischen Leitungswege minimal, da nur das kurze Leitungsstück zwischen dem Stromabnehmer und der ersten Komponente zur elektrischen Absicherung der nachgeschalteten Leistungselektronik elektrisch nicht abgesichert ist. Die den Dachcontainer verlassenden elektrischen Kabel, die z.B. zu einem weiteren Dachcontainer führen, benötigen deshalb keinen aufwendigen mechanischen Schutz mehr.

Weitere Vorteile und Einzelheiten der Erfindung ergeben sich aus der nachfolgenden Beschreibung eines Ausführungsbeispiels anhand der Zeichnung und in Verbindung mit den weiteren Ansprüchen. Es zeigen:
- FIG 1: eine Draufsicht auf einen Dachcontainer des Schienenfahrzeugs;
- FIG 2 und 3: stirnseitige Ansichten des Dachcontainers gemäß FIG 1.

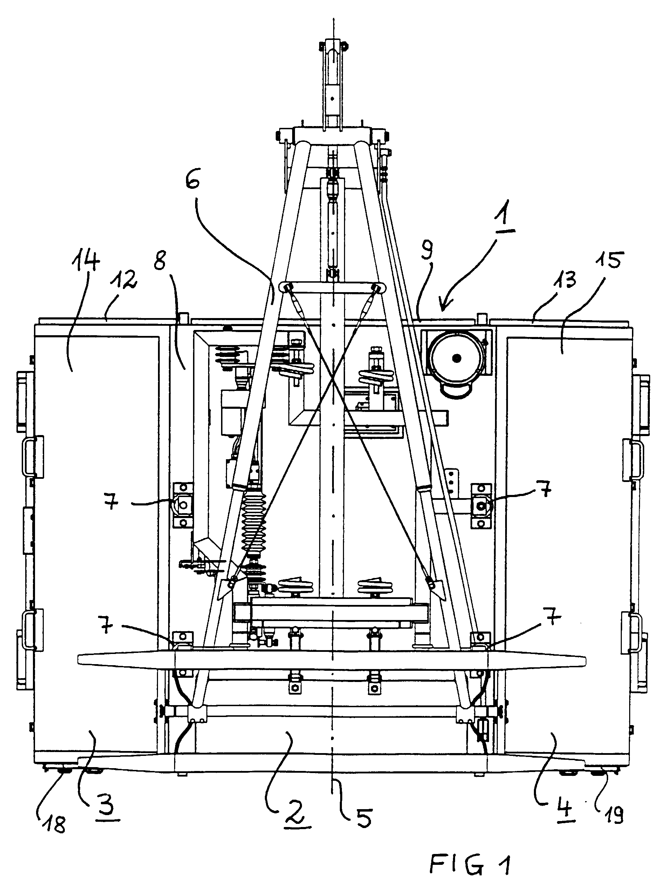

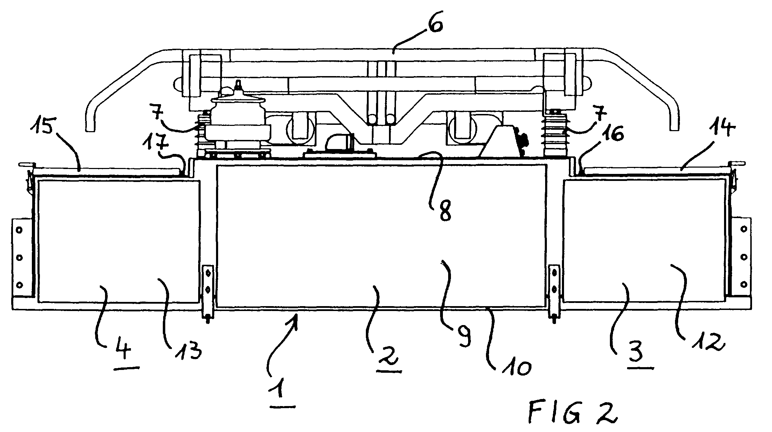

In den FIG 1 und 2 ist mit 1 ein Dachcontainer bezeichnet, der im dargestellten Ausführungsbeispiel aus einem Mittelteil 2 sowie zwei Seitenteilen 3 und 4 besteht, die parallel zur Längsachse 5 des Mittelteils 2 und damit parallel zur Fahrzeuglängsachse verlaufen.

Das Mittelteil 2 ist höher als die beiden Seitenteile 3 und 4 und trägt einen Stromabnehmer 6, dessen Gestänge im wesentlichen die gleiche Breite aufweist wie das Mittelteil 2 des Dachcontainers 1. Der Stromabnehmer 6 ist über Isolatoren 7 beabstandet auf dem Dach 8 des Mittelteils 2 befestigt.

Durch den erfindungsgemäß elektrisch isoliert auf dem Dachcontainer 1 befestigten Stromabnehmer 6 sind die ungesicherten elektrischen Leitungswege minimal, da dann nur das kurze Leitungsstück (in FIG 1 bis 3 nicht dargestellt) zwischen dem Stromabnehmer 6 und den Komponenten für die Absicherung der Hochspannungsausrüstung elektrisch nicht abgesichert ist. Den Dachcontainer 1 verlassende elektrische Kabel, sowohl zur Antriebsausrüstung als auch zu den Heizgeräten und zum Bordnetzumformer, sind elektrisch bereits gesichert.

Der Mittelteil 2 des Dachcontainers 1 ist an seiner dem Gelenkübergang abgewandten Stirnseite durch einen Deckel 9 abgeschlossen, der um eine untere, waagrecht verlaufende Achse 10 schwenkbar ist (FIG 2).

Die Seitenteile 3 und 4 des Dachcontainers 1 sind an ihren dem Gelenkübergang abgewandten Stirnseiten jeweils durch einen herausnehmbaren Deckel 12 bzw.13 abgeschlossen (FIG 2).

Weiterhin ist jedes Seitenteil 3 bzw.4 des Dachcontainers 1 durch einen Dachdeckel 14 bzw.15 abschließbar. Beide Dachdeckel 14 und 15 sind um eine Achse 16 bzw.17 zur Fahrzeugmitte hin aufschwenkbar.

Durch die stirnseitig angeordneten Deckel 9, 12 und 13 sowie durch die Dachdeckel 14 und 15 ist eine gute Zugänglichkeit zu sämtlichen im Dachcontainer 1 enthaltenen Komponenten zur Absicherung und Verteilung der Hochspannung gewährleistet.

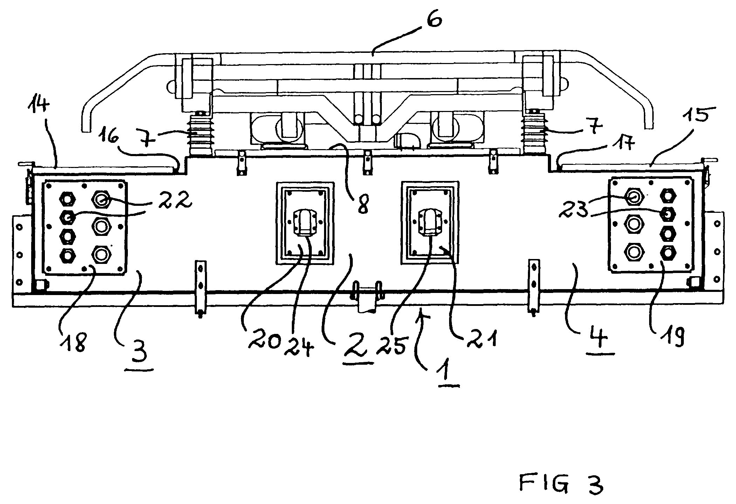

Die Öffnungen in der dem Gelenkübergang zugewandten Stirnseite des Dachcontainers 1 sind durch Deckel 18 bis 21 abgeschlossen (FIG 3).

Die Deckel 18 und 19 weisen Kabeldurchführungen 22 und 23 für eine dahinter angeordnete Gelenkklemmstelle auf, wohingegen an den Deckeln 20 und 21 die Anschlußstellen 24 und 25 im Gelenkbereich angeordnet sind.

## Patentansprüche

1. Elektrisch angetriebenes Fahrzeug mit wenigstens einem Dachcontainer (1) und wenigstens einem Stromabnehmer (6), wobei der Dachcontainer (1) zumindest Komponenten zur elektrischen Absicherung der dem Stromabnehmer (6) nachgeschalteten Leistungelektronik enthält,
**dadurch gekennzeichnet,**
daß der Stromabnehmer (6) elektrisch isoliert auf dem Dachcontainer (1) befestigt ist.

2. Fahrzeug nach Anspruch 1,
**dadurch gekennzeichnet**,
daß der Dachcontainer (1) wenigstens einen Dachdeckel (14,15) aufweist, der parallel oder quer zur Längsachse des Stromabnehmers (6) angeordnet ist.

3. Fahrzeug nach Anspruch 2,
**dadurch gekennzeichnet**,
daß der Dachdeckel (14 bzw.15) zur Fahrzeugmitte hin aufschwenkbar ist.

4. Fahrzeug nach Anspruch 2,
**dadurch gekennzeichnet**,
daß der Dachdeckel (14) herausnehmbar ist.

5. Fahrzeug nach Anspruch 1,
**dadurch gekennzeichnet**,
daß der Dachcontainer (1) an wenigstens einer Stirnseite wenigstens eine durch einen Deckel (9,12,13) abschließbare Öffnung aufweist.

6. Fahrzeug nach Anspruch 5,
**dadurch gekennzeichnet,**
daß der Deckel (9) um eine senkrechte oder waagrechte Achse (10) schwenkbar ist.

7. Fahrzeug nach Anspruch 5,
**dadurch gekennzeichnet,**
daß der Deckel (10) herausnehmbar ist.

8. Fahrzeug nach Anspruch 1,
**dadurch gekennzeichnet**,
daß der Dachcontainer (1) Anschlüsse für die Gelenkübergänge aufweist.

9. Fahrzeug nach Anspruch 1,
**dadurch gekennzeichnet**,
daß der Dachcontainer (1) Anschlüsse für die elektrischen Leitungen aus dem Fahrgastraum des Fahrzeugs aufweist.

10. Fahrzeug nach Anspruch 1,
**dadurch gekennzeichnet,**
daß der Dachcontainer (1) Anschlüsse für die Leitungen auf dem Fahrzeugdach aufweist.

11. Fahrzeug nach Anspruch 1,
**dadurch gekennzeichnet**,
daß der Dachcontainer (1) unmittelbar am Gelenkübergang zu einem benachbarten Fahrzeugteil angeordnet ist und an der dem benachbarten Fahrzeugteil zugewandten Seite eine Gelenkklemmstelle beinhaltet.

## Claims

1. Electrically driven vehicle having at least one roof container (1) and at least one current collector (6), with the roof container (1) containing at least components for the electrical protection of the power electronics connected downstream of the current collector (6), characterised in that the current collector (6) is fastened to the roof container (1) in an electrically insulated manner.

2. Vehicle according to claim 1, characterised in that the roof container (1) has at least one roof cover (14, 15) which is arranged in parallel with or at right angles to the longitudinal axis of the current collector (6).

3. Vehicle according to claim 2, characterised in that the roof cover (14 and 15) can be pivoted up towards the vehicle centre.

4. Vehicle according to claim 1, characterised in that the roof cover (14) is removable.

5. Vehicle according to claim 1, characterised in that the roof container (1) has, on at least one end face, at least one opening which can be closed off by a cover (9, 12, 13).

6. Vehicle according to claim 5, characterised in that the cover (9) can be pivoted about a vertical or horizontal axis (10).

7. Vehicle according to claim 5, characterised in that the cover (10) is removable.

8. Vehicle according to claim 1, characterised in that the roof container (1) has connections for the articulated transitions.

9. Vehicle according to claim 1, characterised in that the roof container (1) has connections for the electrical lines from the passenger space of the vehicle.

10. Vehicle according to claim 1, characterised in that the roof container (1) has connections for the lines on the vehicle roof.

11. Vehicle according to claim 1, characterised in that the roof container (1) is arranged directly at the articulated transition to an adjacent vehicle portion and, on the side which faces the adjacent vehicle portion, contains an articulated clamping point.

## Revendications

1. Véhicule à propulsion électrique, pourvu d'au moins un conteneur (1) de toit et d'au moins un pantographe (6), le conteneur (1) de toit contenant au moins des composants pour la protection électrique de l'équipement électronique de puissance branché en aval du pantographe (6),
**caractérisé** en ce que le pantographe (6) est fixé sur le conteneur (1) de toit en étant électriquement isolé.

2. Véhicule suivant la revendication 1, **caractérisé** en ce que le conteneur (1) de toit est pourvu d'au moins un couvercle (14, 15) de toit, qui est disposé parallèlement ou transversalement à l'axe longitudinal du pantographe (6).

3. Véhicule suivant la revendication 2, **caractérisé** en ce que le couvercle (14 ou 15) de toit peut être ouvert par pivotement vers le milieu du véhicule.

4. Véhicule suivant la revendication 2, **caractérisé** en ce que le couvercle (14) de toit peut être enlevé.

5. Véhicule suivant la revendication 1, **caractérisé** en ce que le conteneur (1) de toit comporte, sur au moins un côté frontal, au moins une ouverture pouvant être fermée par un couvercle (9, 12, 13).

6. Véhicule suivant la revendication 5, **caractérisé** en ce que le couvercle (9) peut pivoter autour d'un axe (10) vertical ou horizontal.

7. Véhicule suivant la revendication 5, **caractérisé** en ce que le couvercle (10) peut être enlevé.

8. Véhicule suivant la revendication 1, **caractérisé** en ce que le conteneur (1) de toit comporte des bornes pour les transitions articulées.

9. Véhicule suivant la revendication 1, **caractérisé** en ce que le conteneur (1) de toit comporte des bornes pour les lignes électriques provenant de l'habitacle du véhicule.

10. Véhicule suivant la revendication 1, **caractérisé** en ce que le conteneur (1) de toit comporte des bornes pour les lignes électriques s'étendant sur le toit du véhicule.

11. Véhicule suivant la revendication 1, **caractérisé** en ce que le conteneur (1) de toit est disposé directement sur la transition articulée vers une partie voisine du véhicule et comporte, sur le côté tourné vers la partie voisine du véhicule, un point de serrage d'articulation.
